# EUROPÄISCHE PATENTSCHRIFT

(11) **EP 1 799 476 B1**
(45) Veröffentlichungstag und Bekanntmachung des Hinweises auf die Patenterteilung: **12.08.2009**
(21) Anmeldenummer: 05797322.4
(22) Anmeldetag: 29.09.2005
(51) Int. Cl.: B60H 1/00, B60H 3/06

(54) **LUFTFÜHRUNGSGEHÄUSE FÜR KRAFTFAHRZEUGE**
AIR DUCT HOUSING FOR MOTOR VEHICLES
LOGEMENT DE GUIDAGE D'AIR POUR VEHICULES AUTOMOBILES

(30) Priorität: 29.09.2004 DE 102004047900
(43) Veröffentlichungstag der Anmeldung: 27.06.2007
(73) Patentinhaber: Behr GmbH & Co. KG, 70469 Stuttgart (DE)
(72) Erfinder: KOMOWSKI, Michael, 71263 Weil der Stadt-Merklingen (DE); BOSQUET, Stéphane, 70195 Stuttgart (DE); BURKHARDT, Carsten, 74653 Künzelsau (DE); SCHWEIZER, Gebhard, 71229 Leonberg (DE)
(86) Internationale Anmeldenummer: PCT/EP2005/010508
(87) Internationale Veröffentlichungsnummer: WO 2006/034861

(56) Entgegenhaltungen:
- EP-A- 1 134 103
- EP-B- 0 595 336
- DE-A1- 4 425 362
- FR-A- 2 727 903
- FR-A- 2 741 841

## Beschreibung

Die Erfindung betrifft ein Luftführungsgehäuse für Belüftungs-, Heizungs-oder Klimaanlagen in einem Kraftfahrzeug gemäß dem Oberbegriff des Anspruches 1.

Aus der EP 0595 336 B1 die als nächstliegender Stand derTechnik gesehen wird, ist ein Luftführungsgehäuse für Belüftungs-, Heizungs- oder Klimaanlagen in einem Kraftfahrzeug mit Öffnungen zur Montage von Anschlussteilen wie Luftzufuhrstutzen, Verschlussdeckeln oder dergleichen, bekannt, wobei eine Öffnung von einer Ringfläche umgeben ist, an der eine Ringfläche eines montierten Anschlussteils dichtend anliegt, und auf der ersten Ringfläche ein umlaufender Dichtungssteg und in der anderen Ringfläche eine umlaufende Dichtungsnut vorgesehen ist. Dabei greifen der Dichtungssteg und die Dichtungsnut nach Art einer Nut-Feder-Verbindung axial ineinander. Ferner ist das Anschlussteil in Umfangsrichtung der Ringflächen zum Schließen einer Drehverriegelung drehbar am Luftführungsgehäuse gehalten. Dabei ist die Verbindung als eine Art Bajonettverbindung ausgestaltet.

Ferner ist aus der DE 198 35 287 C2 ein Gehäuse einer Heizungs- oder Klimaanlage eines Kraftfahrzeugs bekannt, das aus zwei Gehäuseteilen besteht, die entlang einer Trennebene dichtend miteinander verbindbar sind,
wobei die miteinander verbindbaren Gehäuseteilränder derart ausgebildet sind, dass zum Verbinden der Gehäuseteile diese relativ zueinander in einer in der Trennebene liegenden Richtung linear verschiebbar sind. Dabei ist eine dichtende Verbindung als Nut-Feder-Verbindung ausgebildet, wobei die Nuttiefenrichtung in der Trennebene liegt. Die Nut bzw. die Feder eines Gehäuseteiles erstreckt sich jeweils über etwa die Hälfte des Gehäuseteilrandumfangs. Zudem sind Rastmittel vorgesehen, welche ein Verrasten der verbundenen Gehäuseteile ermöglichen.

Ausgehend von diesem Stand der Technik ist es Aufgabe der Erfindung, ein verbessertes Luftführungsgehäuse zur Verfügung zu stellen. Diese Aufgabe wird gelöst durch ein Luftführungsgehäuse mit den Merkmalen des Anspruchs 1. Vorteilhafte Ausgestaltungen sind Gegenstand der Unteransprüche.

Erfindungsgemäß ist ein Luftführungsgehäuse für Belüftungs-, Heizungs-oder Klimaanlagen in einem Kraftfahrzeug mit Öffnungen zur Montage von Anschlussteilen wie Luftzufuhrstutzen, Verschlussdeckeln, weiteren Gehäuseteilen oder dergleichen vorgesehen, wobei eine Öffnung von einer Fläche umgeben ist, an der eine Fläche eines montierten Anschlussteils dichtend anliegt, und ein Dichtungsbereich zwischen dem Luftführungsgehäuse und dem Anschlussteil als eine Art Nut-Feder-Verbindung ausgebildet ist, und mindestens eine Verriegelungsvorrichtung getrennt von Dichtungsbereich vorgesehen ist, wobei ein Teil der Verriegelungsvorrichtung am Luftführungsgehäuse und ein Teil der Verriegelungsvorrichtung am Anschlussteil ausgebildet ist,
wobei der Dichtungsbereich umlaufend ausgebildet ist, und die Verriegelungsvorrichtungen außerhalb des vom Dichtungsbereich eingeschlossenen Bereichs angeordnet sind und die Teile der Verriegelungsvorrichtung durch eine lineare Relativbewegung zwischen Luftführungsgehäuse und Anschlussteil miteinander verriegelbar sind. Die getrennte

Ausbildung von Dichtungsbereich und Verriegelungsvorrichtung ermöglicht, dass der Dichtungsbereich ausschließlich in Hinblick auf seine Nichtfunktion ausgelegt werden kann, insbesondere auch in Bezug auf die Materialauswahl, da keine Festigkeitsvorgaben in Folge von Haltefunktionen gegeben sind. Die lineare Relativbewegung nach dem Positionieren der zu verbindenden Teile ist deutlich einfacher als eine Drehbewegung und bietet Vorteile in Hinblick auf den erforderlichen Montageraum.

Bevorzugt sind auf jeder in Zusammenbaurichtung verlaufenden Seite des Luftführungsgehäuses und des Anschlussteils mindestens zwei, insbesondere drei Verriegelungsvorrichtungen ausgebildet. Die äußeren Verriegelungsvorrichtungen sind hierbei bevorzugt leicht beabstandet von den Enden des kleineren Teils angeordnet. Ansonsten ist die Verteilung der Verriegelungsvorrichtungen bevorzugt gleichmäßig, d.h. in äquidistanten Abständen. Insbesondere im Falle von möglichen Querbelastungen kann auch eine diesbezüglich optimierte Verteilung erfolgen.

Die Verriegelungsvorrichtung umfasst bevorzugt einen hakenförmigen Bereich und einen vorstehenden Bereich, die an unterschiedlichen Bauteilen ausgebildet sind und miteinander zusammenwirken. Dabei ist bevorzugt der hakenförmige Bereich gegenüber dem vorstehenden Bereich im zusammengebauten Zustand vorgespannt, wofür vorzugsweise der hakenförmige Bereich gegenüber dem vorstehenden Bereich geneigt angeordnet.

Um einen Endanschlag für in Zusammenbaurichtung zu Verfügung zu stellen, ist vorzugsweise der hakenförmige Bereich in Zusammenbaurichtung vorne verschlossen. Dabei können auch nur einzelne der hakenförmigen Bereiche mit verschlossenen Enden ausgebildet sein, insbesondere die hakenförmigen Bereiche, die in Zusammenbaurichtung ganz hinten angeordnet sind, so dass ein Durchschieben der vorstehenden Bereiche durch die vorderen hakenförmigen Bereiche möglich ist. Die erhöht die Flexibilität des Zusammenbaus und der Demontage.

Der hakenförmige Bereich weist zur Erhöhung der Stabilität bevorzugt mindestens eine, vorzugsweise drei, Verstärkungsrippen auf, die auf der Hakenaußenseite über bevorzugt den gesamten Außenbereich bis nahezu zum Ende verlaufen.

Erfindungsgemäß ist der Dichtungsbereich umlaufend ausgebildet, und die Verriegelungsvorrichtungen sind außerhalb des vom Dichtungsbereich eingeschlossenen Bereichs angeordnet. Ein umlaufender Dichtungsbereich ist vorteilhaft in Hinblick auf eine optimale Abdichtung, da keine Übergänge zwischen einzelnen Dichtelementen erforderlich sind.

Der Dichtungsbereich verläuft vorzugsweise im Bereich, in welchen die Verriegelungsvorrichtungen vorgesehen sind, in gerader Linie und parallel zur Zusammenbaurichtung. Dabei kann der Dichtungsbereich durchaus auch eine Führungsfunktion und Zentrierungsfunktion beim Zusammenbau übernehmen.

Bei den zu verbindenden Teilen handelt es sich bevorzugt um Ansauggehäuse und Gebläsegehäuse, um einen an einer Gehäuseöffnung des Luftführungsgehäuses anzubringenden Filterdeckel, oder um ein Gebläsegehäuse und einem Filtergehäuse.

Im Folgenden wird die Erfindung anhand dreier Ausführungsbeispiele unter Bezugnahme auf die Zeichnung im Einzelnen erläutert. Es zeigen:
- Fig. 1: eine perspektivische Ansicht eines Luftführungsgehäuses gemäß dem ersten Ausführungsbeispiel bestehend aus einem Ansauggehäuse und einem Gebläsegehäuse, die miteinander verbunden sind,
- Fig. 2: eine andere perspektivische Ansicht des Luftführungsgehäuses von Fig. 1,

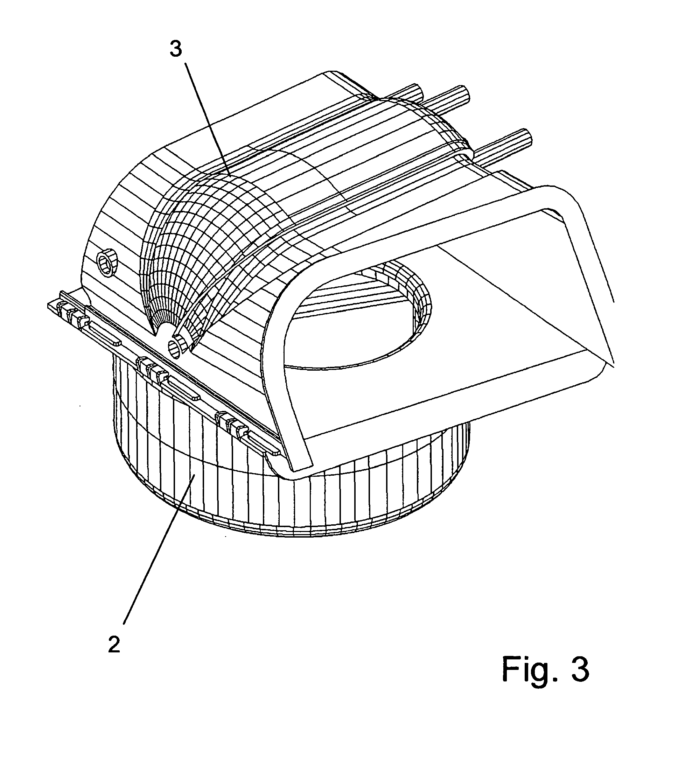

- Fig. 3: eine perspektivische Ansicht des Luftführungsgehäuses von Fig. 1 nach einem ersten Montageschritt,

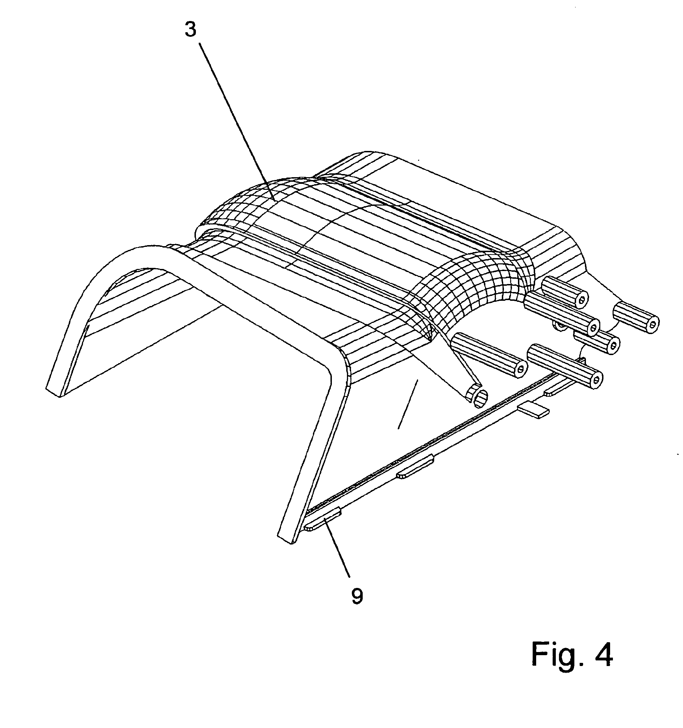

- Fig. 4: eine perspektivische Ansicht des Ansauggehäuses von Fig. 1,

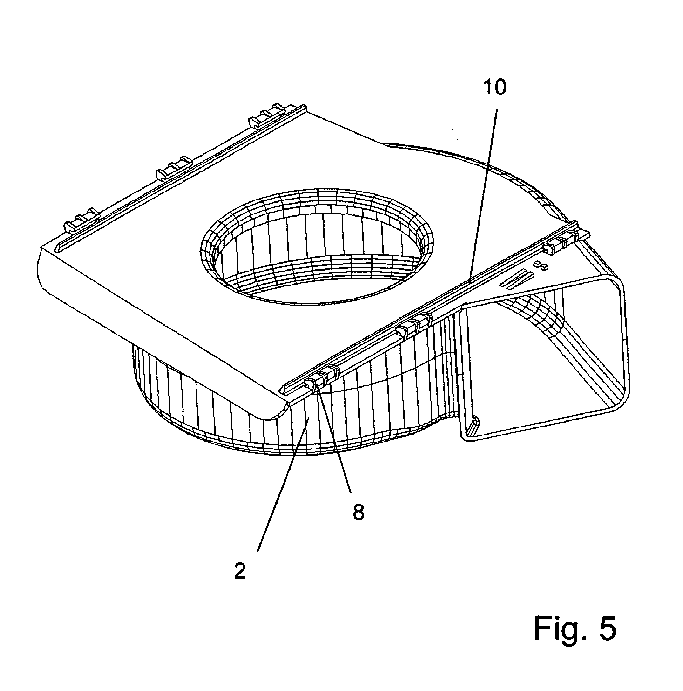

- Fig. 5: eine perspektivische Ansicht des Gebläsegehäuses von Fig. 1,
- Fig. 6: eine perspektivische, geschnittene Detaildarstellung des Luftführungsgehäuses von Fig. 1,

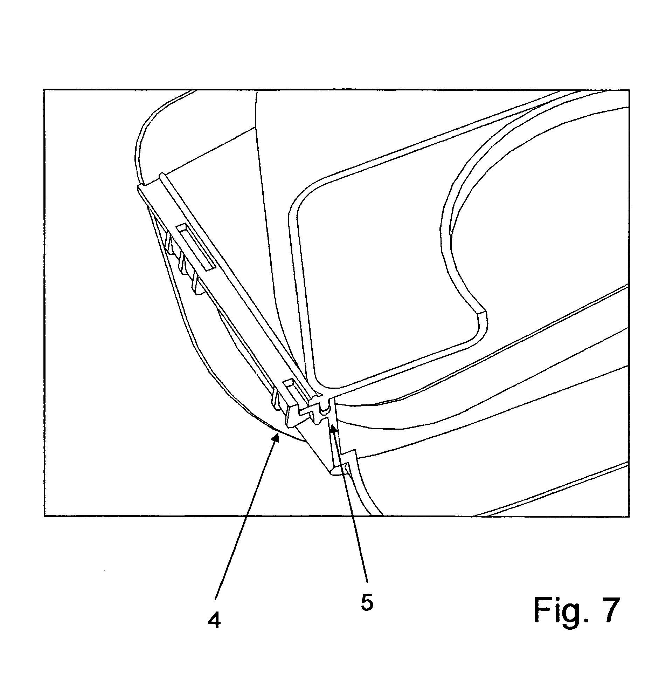

- Fig. 7: eine andere perspektivische, geschnittene Detaildarstellung des Luftführungsgehäuses von Fig. 1,

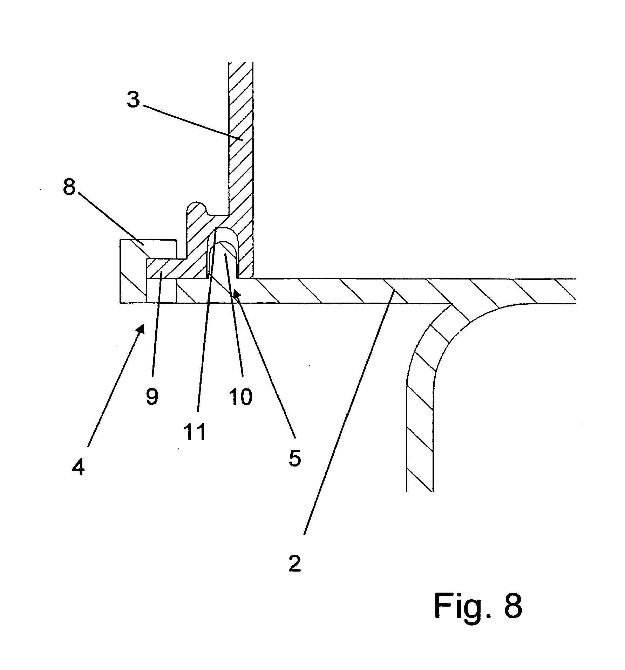

- Fig. 8: einen Schnitt durch eine Verbindungsvorrichtung gemäß dem ersten Ausführungsbeispiel,

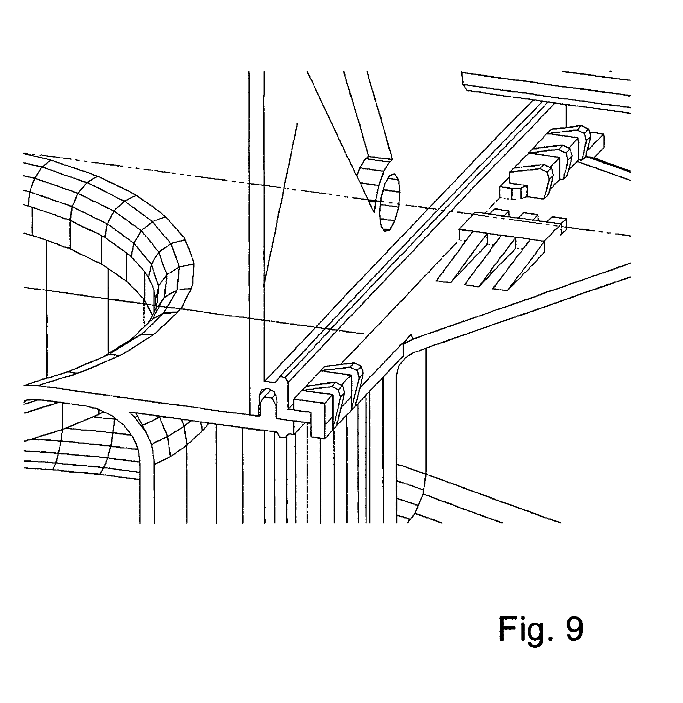

- Fig. 9: eine weitere perspektivische, vergrößerte Detaildarstellung des Luftführungsgehäuses von Fig. 1 im Bereich einer Verbindungsvorrichtung,
- Fig. 10: eine perspektivische Ansicht eines Luftführungsgehäuses mit Filterdeckel gemäß dem zweiten Ausführungsbeispiel,
- Fig. 11: eine andere perspektivische Ansicht des Luftführungsgehäuses beim Zusammenbauen,
- Fig. 12: eine Fig. 11 entsprechende perspektivische Ansicht im einem weiter fortgeschrittenen Zusammenbauzustand,
- Fig. 13: eine perspektivische Ansicht des Luftführungsgehäuses ohne Filterdeckel,
- Fig. 14: eine perspektivische Ansicht des Filterdeckels,
- Fig. 15: eine andere perspektivische Ansicht des Filterdeckels,
- Fig. 16a-c: drei verschiedene Ausgestaltungsformen für die vorstehenden und hakenförmigen Bereiche,
- Fig. 17: eine perspektivische Ansicht eines Luftführungsgehäuses gemäß dem dritten Ausführungsbeispiel bestehend aus einem Filtergehäuse und einem Gebläsegehäuse, die miteinander verbunden sind,
- Fig. 18: eine perspektivische Ansicht des Gebläsegehäuses gemäß Fig.17,
- Fig. 19: eine perspektivische Ansicht des Filtergehäuses gemäß Fig.17,
- Fig. 20: eine Detaildarstellung des Dichtungsbereichs des dritten Ausführungsbeispiels,
- Fig. 21: eine Detaildarstellung des Verriegelungsbereichs des dritten Ausführungsbeispiels und
- Fig. 22a-c: Darstellung der Montageschritte beim Zusammenbau des Luftführungsgehäuses gemäß dem dritten Ausführungsbeispiel.

Ein mehrteiliges Luftführungsgehäuse 1, von dem im Folgenden nur auf den Gebläsegehäuseteil, auf welchen als Gebläsegehäuse 2 Bezug genommen wird, und auf den Ansauggehäuseteil, auf welchen als Ansauggehäuse 3 Bezug genommen wird, ist Teil einer Kraftfahrzeug-Klimaanlage. Das Ansauggehäuse 3 bildet dabei ein Anschlussteil an das Luftführungsgehäuse. Die beiden Gehäuseteile 2 und 3 sind mittels sechs Verbindungsvorrichtungen 4 miteinander lösbar verbunden. Ferner sind Dichtungsbereiche 5 vorgesehen, welche ein Ausströmen von Luft verhindern. Die je drei auf einer Seite des Gebläsegehäuses 2 angeordneten Verbindungsvorrichtungen 4 sind jeweils etwas beabstandet von den Enden und etwa mittig angeordnet,
wobei die einander gegenüberliegenden Verbindungsvorrichtungen 4 jeweils auf gleicher Höhe angeordnet sind.

Am Gebläsegehäuse 2 ist ansauggehäuseseitig ein ebener, etwa rechteckförmiger Bereich 6 ausgebildet, in dessen Mitte eine kreisförmige Öffnung 7 für die Luftzufuhr zum im Inneren des Gebläsegehäuses 2 angeordneten Gebläse (nicht dargestellt) vorgesehen ist. An zwei gegenüberliegenden Seiten des rechteckförmigen Bereichs 6 sind entlang zweier paralleler Geraden je drei hakenförmige Bereiche 8 ausgebildet, welche mit in entsprechenden Abständen ausgebildeten, vorstehenden Bereichen 9 des Ansauggehäuses 3 zusammenwirken und die sechs Verbindungsvorrichtungen 4 bilden. Die hakenförmigen Bereiche 8 sind an ihrem in Zusammenbaurichtung hinten angeordneten Ende verschlossen, so dass die Endposition des Ansauggehäuses 3 im Gebläsegehäuse 2 festgelegt wird, d.h. die verschlossenen Enden bilden den Endanschlag.

Parallel zu den beiden zuvor genannten Geraden ist auf der Seite der kreisförmigen Öffnung 7 jeweils eine sich über nahezu die gesamte Länge des rechteckförmigen Bereichs 6 erstreckende Rippe 10 ausgebildet, welche den gebläseseitigen Teil des Dichtungsbereichs 5 bildet. Die beiden Rippen 10 sind in je einer sauggebläseseitigen Nut 11 aufgenommen, welche zusammen die beiden Dichtungsbereiche 5 bilden.

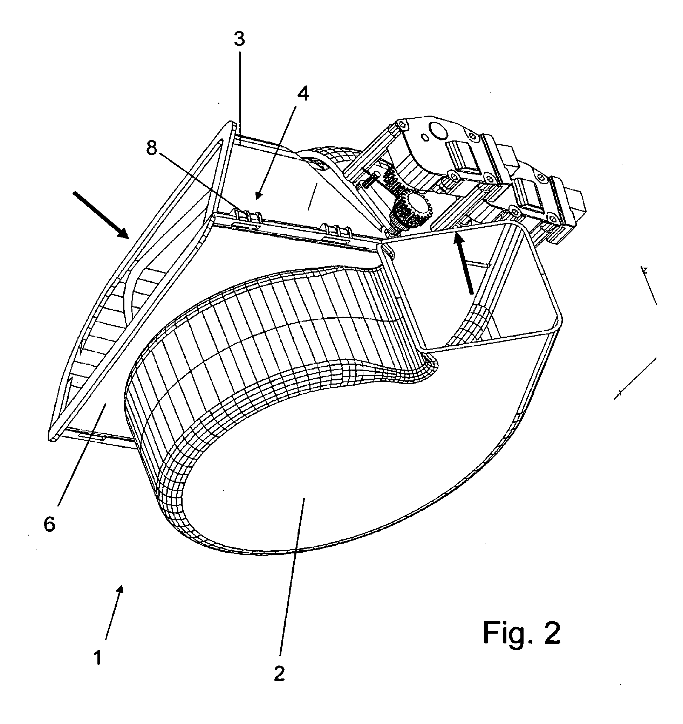

Das Ansauggehäuse 3 ist U-förmig ausgebildet, wobei etwa in dessen Mitte eine Klappe (nicht dargestellt) zur Regelung der vom Gebläse angesaugten Umgebungs- und Umluft angeordnet ist. Am Ansauggehäuse 3 ist mindestens ein Aktuator für die Klappe sowie weitere Elemente außen anbringbar, wie in Fig. 2 dargestellt. Die Ausgestaltung des Ansauggehäuses 3 entspricht - abgesehen von den Kontaktbereichen, insbesondere dem Dichtungsbereich 5 und den Bereichen der Verbindungsvorrichtungen 4 - herkömmlichen Ansauggehäusen. An dem gebläsegehäuseseitigen Ende der beiden Schenkel des U-förmigen Ansauggehäuses 3 ist in Längsrichtung verlaufend die Nut 11, welche Teil des Dichtungsbereichs 5 ist, angeordnet. Ferner stehen nach außen je drei Bereiche 9 vor, die mit den hakenförmigen Bereichen 8 des Gebläsegehäuses 2 zusammenwirken und die Verbindungsvorrichtungen 4 bilden. Im zusammengebauten Zustand liegt die in Zusammenbaurichtung vorn liegende Seite der vorstehenden Bereiche 9 an den verschlossenen Enden der hakenförmigen Bereiche 8 des Gebläsegehäuses 2 an.

Gemäß dem vorliegenden Ausführungsbeispiel erstrecken sich die vorstehenden Bereiche 9 des Ansauggehäuses 3 in einer Ebene, die parallel zur Ebene des rechteckförmigen Bereichs 6 des Gebläsegehäuses 2 erstreckt, und die hakenförmigen Bereiche 8 sind hierzu leicht geneigt und derart ausgebildet, dass eine gewisse Vorspannung gewährleistet ist und sichergestellt werden kann, dass die beiden Gehäuseteile ohne zusätzliche Befestigungsmittel, wie Schrauben, Bolzen etc. miteinander verbunden sind. Im Falle einer zu erwartenden Belastung entgegen der Zusammenbaurichtung können jedoch zusätzliche Maßnahmen getroffen werden, wie beispielsweise das Vorsehen von im zusammengebauten Zustand miteinander fluchtenden Bohrungen in beiden Gehäuseteilen, in welche ein Stift oder ähnliches gesteckt werden kann, oder von Clips-Verbindungen auf den dem verschlossenen Ende der hakenförmigen Bereiche 8 gegenüberliegenden Seiten, welche ein Verrasten mit den entsprechenden vorstehenden Bereichen 9 ermöglichen.

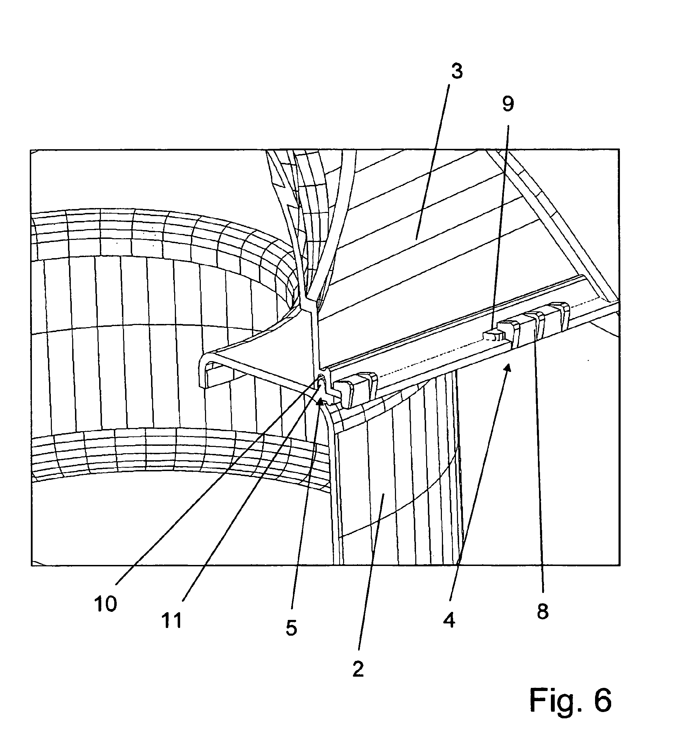

Um die Stabilität der hakenförmigen Bereiche 8 zu erhöhen, sind gemäß dem vorliegenden Ausführungsbeispiel drei Verstärkungsrippen an jedem hakenförmigen Bereich 8 auf dessen Außenseite vorgesehen (vgl. Fig. 6).

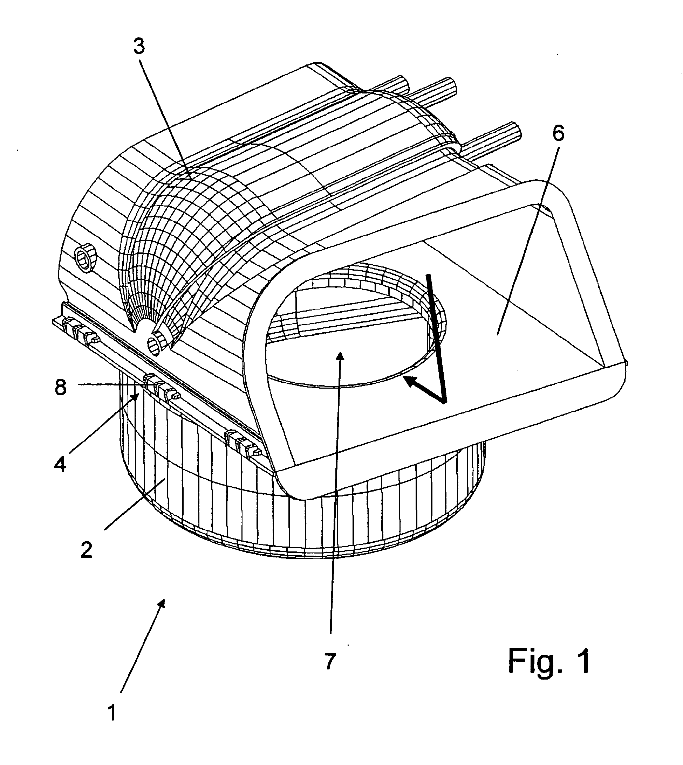

Der Zusammenbau erfolgt, indem das Ansauggehäuse 3 mit seinen vorstehenden Bereichen 9 am Gebläsegehäuse 2 in einem Bereich vor den entsprechenden hakenförmigen Bereichen 8 positioniert wird, wofür Anlageflächen vorgesehen sind. Anschließend erfolgt ein Verschieben des Ansauggehäuses 3 in Zusammenbaurichtung, so dass die vorstehenden Bereiche 9 in die entsprechenden hakenförmigen Bereiche 8 gelangen und die Haken die vorstehenden Bereiche 9 hintergreifen, wobei eine gewisse Vorspannung gegeben ist. Die Bewegungsrichtungen sind in Fig. 1 durch einen abgewinkelten Pfeil dargestellt. Die Montage ist abgeschlossen, sobald die in Zusammenbaurichtung vorn liegende Seite der vorstehenden Bereiche in Anlage an das verschlossene Ende der hakenförmigen Bereiche 8 gelangt. Gemäß der vorliegend beschriebenen Ausgestaltung der Verbindungsvorrichtungen ist somit nur ein sehr kurzer Verschiebeweg erforderlich, welcher die Montage vereinfacht und beschleunigt.

Ist in Einsetzrichtung, womit im Folgenden die Richtung des Positionierens senkrecht zur Zusammenbaurichtung bezeichnet wird, oberhalb der Öffnung kein ausreichender Raum für die Montage vorhanden, so können alle Verbindungsvorrichtungen oder alle bis auf die beiden in Zusammenbaurichtung ganz hinten angeordneten Verbindungsvorrichtungen ohne Endanschlag, d.h. ohne verschlossenes Ende, ausgebildet sein, so dass ein Durchschieben bis zum Erreichen der Endposition möglich ist. Der Endanschlag kann, wenn nicht an den letzten beiden Verbindungsvorrichtungen ausgebildet, auf beliebige sonstige Weise, gegebenenfalls auch durch ein Element, das gleichzeitig der Abdichtung dient, gebildet werden.

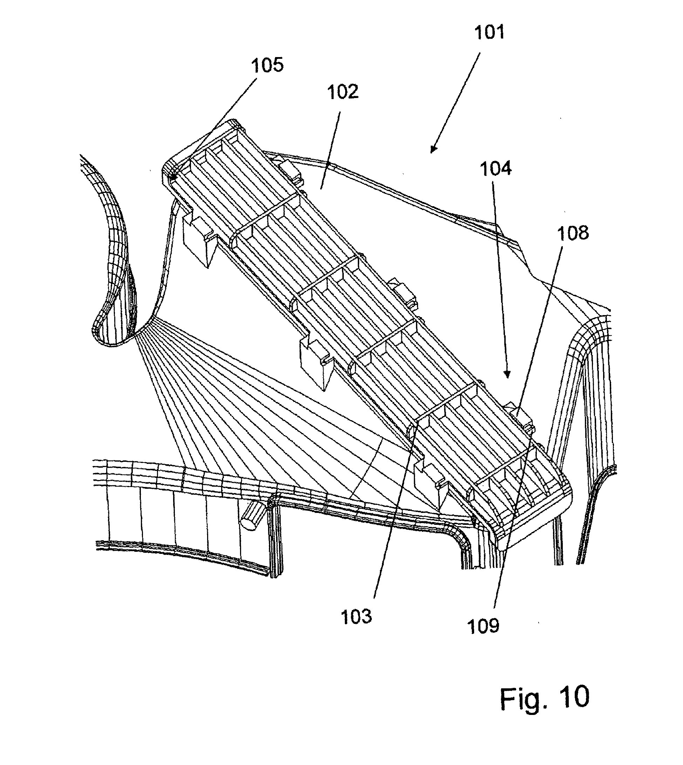

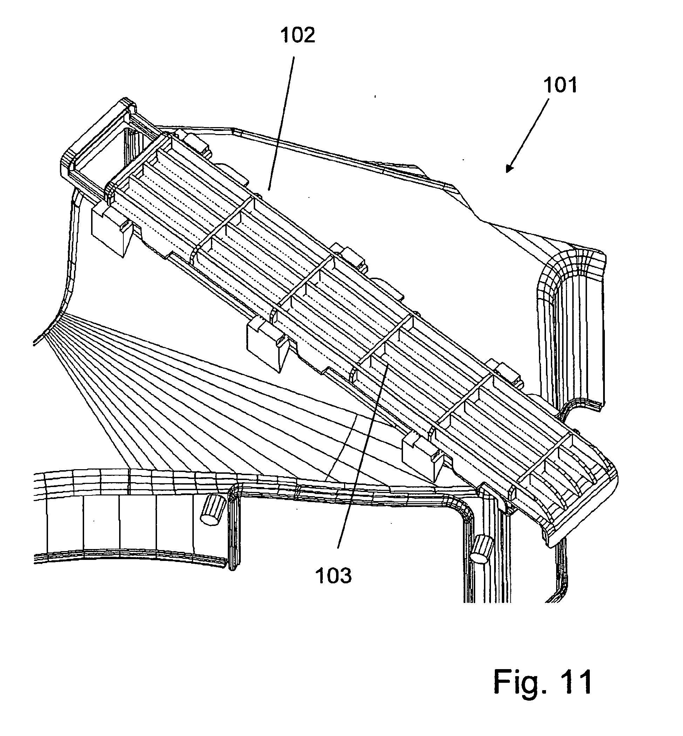

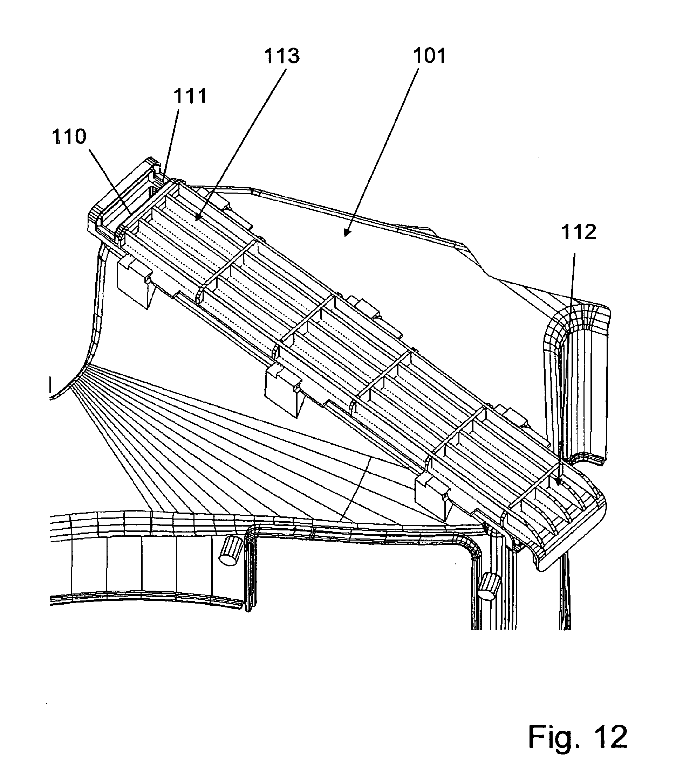

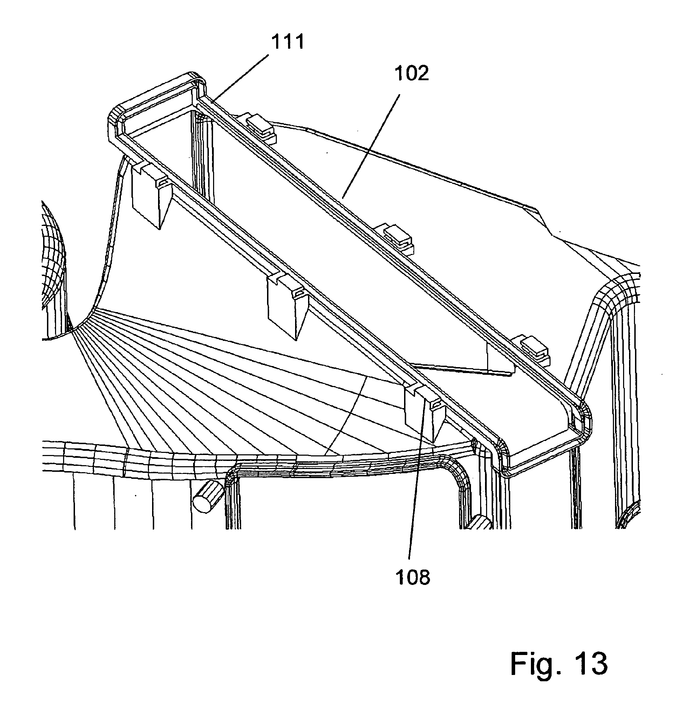

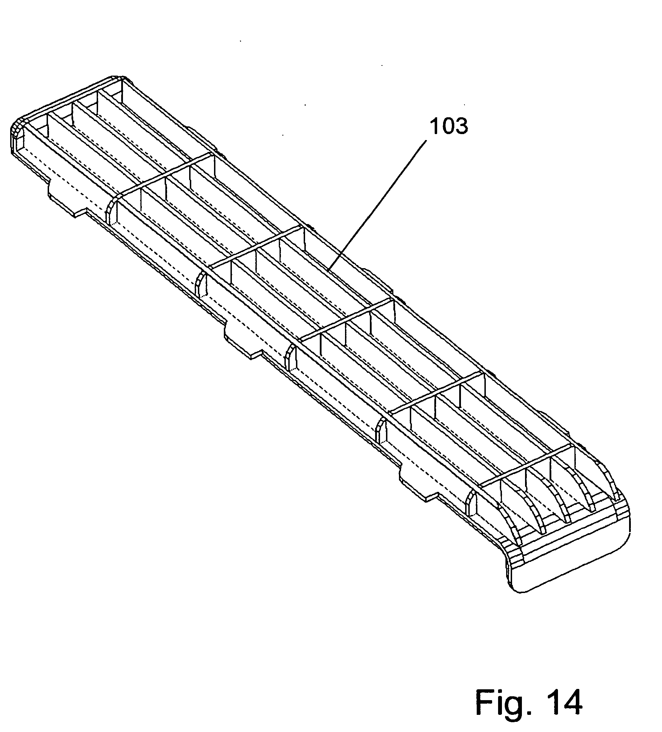

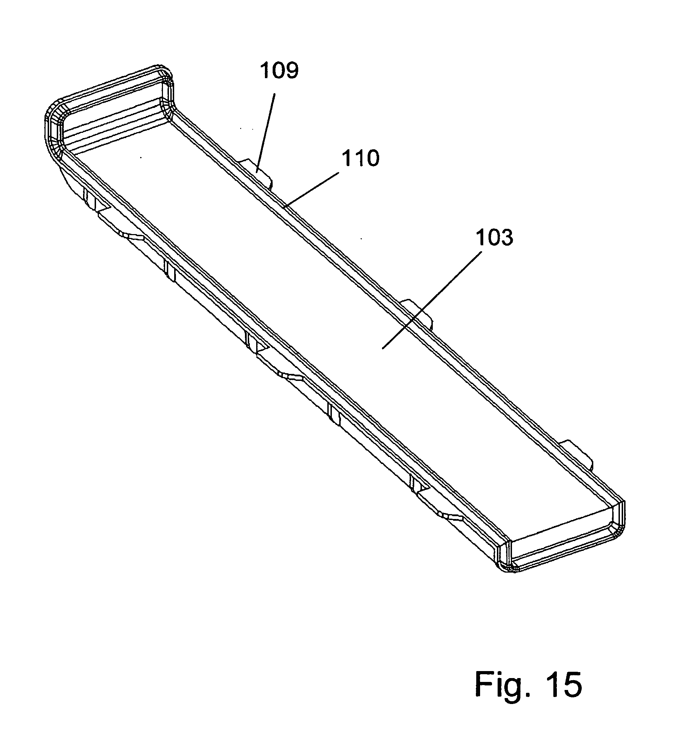

Gemäß dem in den Figuren 10 bis 15 dargestellten zweiten Ausführungsbeispiel ist ein in einem Luftführungsgehäuse 101 anzuordnender Filterdeckel 103 als Anschussteil, der einen Schacht zur Aufnahme eines Filters (nicht dargestellt) verschließt, an einem Bereich 102 des Luftführungsgehäuses 101 mit Hilfe von sechs Verbindungsvorrichtungen 104 angebracht, welche in ihrer Funktion denen des ersten Ausführungsbeispiels entsprechen. Die je drei auf einer Seite des Filterdeckels 103 angeordneten Verbindungsvorrichtungen 104 sind jeweils etwas beabstandet von den Enden und etwa mittig angeordnet, wobei die einander gegenüberliegenden Verbindungsvorrichtungen 104 auf gleicher Höhe angeordnet sind.

Die Verbindungsvorrichtungen 104 werden durch je einen hakenförmigen Bereich 108, der am Luftführungsgehäuse 101 ausgebildet ist, und einen vorstehenden Bereich 109, der am Filterdeckel 103 ausgebildet ist, gebildet. Die hakenförmigen Bereiche 108 sind an ihrem in Zusammenbaurichtung vorn liegenden Ende im Gegensatz zu den hakenförmigen Bereichen 8 des ersten Ausführungsbeispiels offen ausgebildet, da ein Endanschlag des Filterdeckels 103 am Luftführungsgehäuse 101 auf andere Weise ausgebildet ist, jedoch kann gemäß einer nicht in der Zeichnung dargestellten Variante der Endanschlag auch durch endseitig geschlossene hakenförmige Bereiche gebildet werden.

In der Nähe der Verbindungsbereiche verlaufend, jedoch getrennt hiervon ausgebildet ist ein rings umlaufender Dichtungsbereich 105 vorgesehen, welcher durch eine Rippe 110, die am Luftführungsgehäuse 101 ausgebildet ist, und eine Nut 111, die am Filterdeckel 103 ausgebildet ist, gebildet wird. Um auch an dem in Zusammenbaurichtung hinten liegenden Ende, im Folgenden als hinteres Ende 112 bezeichnet, eine Abdichtung zu ermöglichen, ist der Filterdeckel 103 um 90° zum Luftführungsgehäuse 101 hin abgewinkelt ausgebildet, so dass in diesem Bereich die Rippe 110 in Zusammenbaurichtung vorsteht. Die Nut 111 im Luftführungsgehäuse 101 ist entsprechend ausgebildet. Am anderen, vorderen Ende 113 steht die Rippe 110 ebenfalls in Zusammenbaurichtung vor, wobei, um eine vollständige Ausgestaltung der Nut 111 im hinteren Endbereich zu ermöglichen, die Nut 111 in den Eckbereichen nach oben, weg vom Luftführungsgehäuse 101 verläuft und erst nach mindestens einer Rippenhöhe wieder zur anderen Seite hin in gerader Richtung verläuft. Das vordere Ende 113 und das hintere Ende 112 bilden in Folge dieser Ausgestaltung gemeinsam den Endanschlag für den Filterdeckel 103 im Luftführungsgehäuse 101.

Gemäß dem vorliegenden zweiten Ausführungsbeispiel sind keine zusätzlichen Befestigungsmittel vorgesehen, da wiederum die in Folge einer elastischen Verformung der hakenförmigen Bereiche 108 vorliegende Spannung einen ausreichenden Halt für den Filterdeckel 103 bietet. Es können jedoch zusätzliche Befestigungsmittel, wie beispielsweise eine oder mehrere Clipsverbindung, vorgesehen sein.

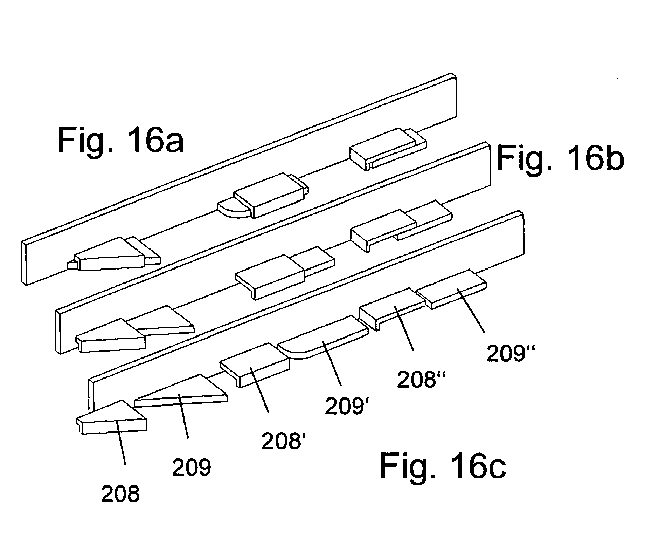

In den Figuren 16a bis 16c sind jeweils drei unterschiedliche Ausgestaltungsformen für die vorstehenden Bereiche und die dazugehörigen hakenförmigen Bereiche in verschiedenen Zusammenbaustadien dargestellt, wobei Fig. 16a den zusammengebauten Zustand, Fig. 16b einen Zustand, bei dem der vorstehende Bereich teilweise in den hakenförmigen Bereich eingeführt ist, und Fig. 16c einen Zustand vor dem Einführen des vorstehenden Bereichs in den hakenförmigen Bereich darstellt.

Gemäß der in den Figuren 16a bis 16c links dargestellten Ausführungsform ist der vorstehende Bereich 209 keilförmig ausgebildet, wie auch der entsprechende hakenförmige Bereich 208. Dabei weist der hakenförmige Bereich 208 ein offenes Ende auf, kann aber auf Grund der Schräge als Endanschlag dienen. Die in der Mitte dargestellte Ausführungsform zeigt einen rechteckförmigen vorstehenden Bereich 209', der zum Erleichtern des Einführens eine abgerundete vordere Seite aufweist. Der hakenförmige Bereich 208' ist mit durchgehendem Querschnitt ausgebildet und hinten offen, so dass ein Durchschieben möglich ist. Die rechts dargestellte Ausführungsform weist einen rechteckförmigen vorstehenden Bereich 209" ohne Abrundung auf. Ferner ist der hakenförmige Bereich 208" endseitig verschlossen, so dass er wiederum als Endanschlag dienen kann.

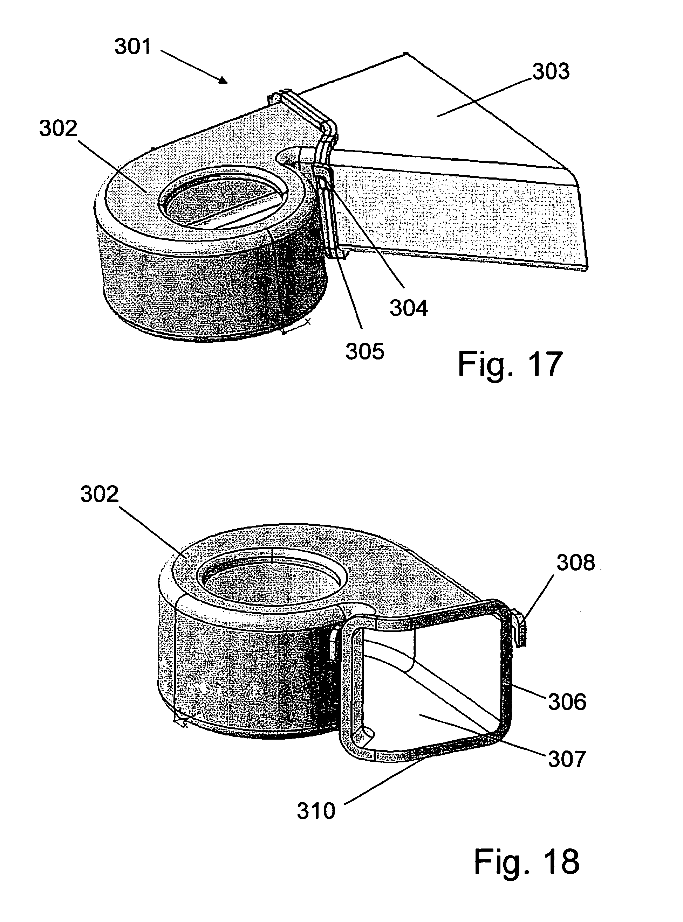

Fig. 17 zeigt ein drittes, der Erfindung folgendes Ausführungsbeispiel mit einem mehrteiligen Luftführungsgehäuse 301, von dem im Folgenden nur auf das Gebläsegehäuseteil, auf welches als Gebläsegehäuse 302 Bezug genommen wird, und auf ein Filteraufnahmeteil, auf welches als Filtergehäuse 303 Bezug genommen wird, das als Teil einer Kraftfahrzeug-Klimaanlage bzw. des Luftführungssystems einer solchen ausgebildet ist. Die beiden Gehäuseteile 302 und 303 sind mittels zweier Verbindungsvorrichtungen 304 miteinander lösbar verbunden. Ferner sind Dichtungsbereiche 305 vorgesehen an denen das Gebläsegehäuse 302 dichtend am Filtergehäuse 303, welches das Anschlussteil darstellt, anliegt.

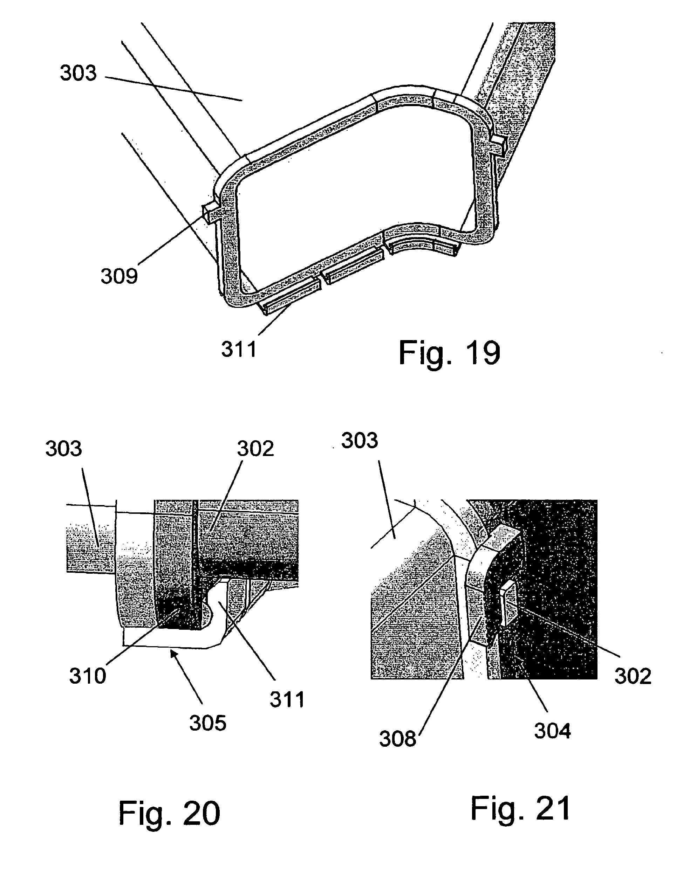

In Fig. 18 und Fig. 19 sind jeweils das Gebläsegehäuse 302 und das Filtergehäuse 303 getrennt voneinander dargestellt. Am Gebläsegehäuse 302 ist ausgangseitig ein in etwa rechteckförmiger Bereich 306, einseitig leicht abgewinkelt, ausgebildet, in dessen Mitte eine Öffnung 307 für die Luftweiterführung zum Filtergehäuse 303 vorgesehen ist. An zwei gegenüberliegenden Längsseiten des rechteckförmigen Bereichs 306 ist im oberen Gehäuseteil entlang zweier paralleler Geraden je ein hakenförmiger Bereich 308 ausgebildet, welcher mit in entsprechenden Abständen ausgebildeten, vorstehenden Bereichen 309 des Filtergehäuses 303 zusammenwirken und die zwei Verbindungsvorrichtungen 304 bilden. Die hakenförmigen Bereiche 308 sind an ihrem in Zusammenbaurichtung hinteren Ende verschlossen, so dass die Endposition des Filtergehäuses 303 am Gebläsegehäuse 302 festgelegt wird, d.h. die verschlossenen Enden bilden den Endanschlag.

Der Dichtungsbereich 305 wird durch drei am Filtergehäuse 303, vorliegend am untenliegenden Teil der Öffnung 307, angeordnete nutartige Aufnahmen 311 und dem flanschartig überstehenden Teil 310 des Gebläsegehäuses 302 gebildet. In Fig. 20 ist hierzu das Zusammenwirken bzw. das Eingreifen des überstehenden Teils 310 in die nutartige Aufnahme 311 nochmals verdeutlicht.

Fig. 21 zeigt, ebenfalls im zusammengebauten Zustand, einen detaillierten Ausschnitt der Verbindungs- oder Verriegelungsvorrichtung 304. Der hakenförmige Bereich 308 des Gebläsegehäuses 302 umgreift den vorstehenden Bereich 309 des Filtergehäuses 303. Die beiden Gehäuseteile (302, 303) sind gegen gegenseitiges Verschieben oder Verkippen mittels dieser Verbindungsvorrichtung 304 und des Dichtungsbereichs 305 gesichert.

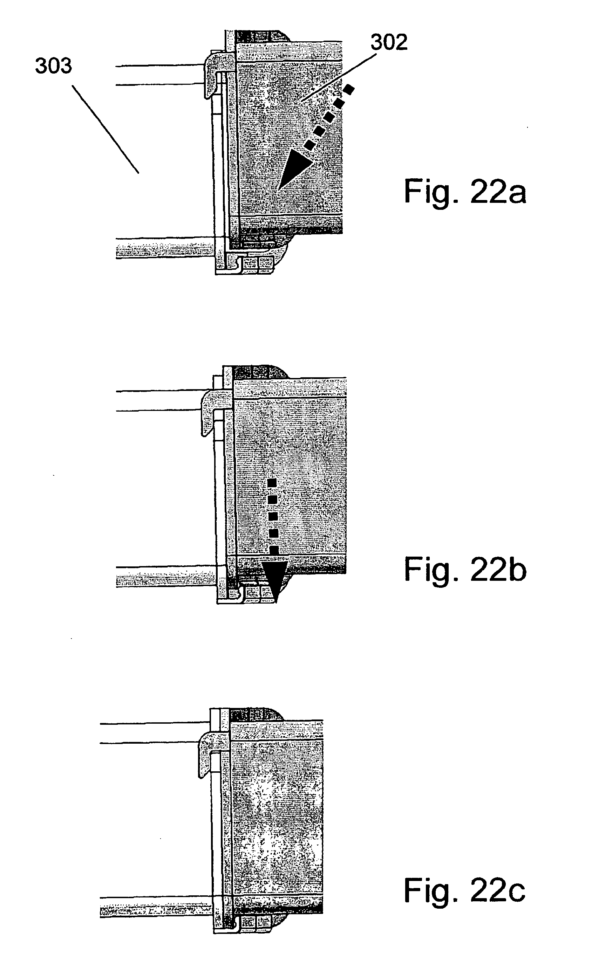

Der Zusammenbauvorgang des Gebläsegehäuses 302 mit dem Filtergehäuse 303 ist in den Figuren 22a bis 22c dargestellt. Wie Fig. 22a zeigt ist der hakenförmige Bereich 308 an seinem freistehenden Ende mit einer Einführschräge versehen, so dass das Aneinanderbringen der beiden Bauteile 302, 303 (die Verschieberichtung ist in Fig. 22a in Form eines Pfeils dargestellt) erleichtert wird. Nach Umgreifen des vorstehenden Bereichs 309 durch den hakenförmigen Bereich 308, wird das Gebläsegehäuse 302 senkrecht nach unten verschoben (ebenfalls durch einen Pfeil in Fig. 22b angedeutet) bis es die in Fig. 22c dargestellte Endposition erreicht und mittels des Verriegelungsvorrichtung 304 verrastet und damit gesichert wird. Der Verschiebeweg der beiden Gehäuseteile 303, 302 zueinander während des Montageprozesses wird somit lediglich durch die Länge des hakenförmigen Bereichs 308, des vorstehenden Bereichs 309 und/oder die Tiefe der nutartigen Aufnahme 311 bestimmt.

## Patentansprüche

1. Luftführungsgehäuse für Belüftungs-, Heizungs- oder Klimaanlagen in einem Kraftfahrzeug mit Öffnungen zur Montage von Anschlussteilen wie Luftzufuhrstutzen, Verschlussdeckeln oder dergleichen, wobei eine Öffnung (7) von einer Fläche umgeben ist, an der eine Fläche eines montierten Anschlussteils dichtend anliegt, und ein Dichtungsbereich (5; 105) zwischen dem Luftführungsgehäuse (1; 101) und dem Anschlussteil als eine Art Nut-Feder-Verbindung ausgebildet ist, und mindestens eine Verriegelungsvorrichtung (4; 104) getrennt vom Dichtungsbereich (5; 105) vorgesehen ist, wobei ein Teil der Verriegelungsvorrichtung (4; 104) am Luftführungsgehäuse (1; 101) und ein Teil der Verriegelungsvorrichtung (4; 104) am Anschlussteil ausgebildet ist, wobei der Dichtungsbereich (105) umlaufend ausgebildet ist, und die Verriegelungsvorrichtungen (104) außerhalb des vom Dichtungsbereich (105) eingeschlossenen Bereichs angeordnet sind **dadurch gekennzeichnet, dass** die Teile der Verriegelungsvorrichtung (4; 104) durch eine lineare Relativbewegung zwischen Luftführungsgehäuse (1; 101) und Anschlussteil miteinander verriegelbar sind.

2. Luftführungsgehäuse nach Anspruch 1, **dadurch gekennzeichnet, dass** auf jeder in Zusammenbaurichtung verlaufenden Seite des Luftführungsgehäuses (1; 101) und des Anschlussteils mindestens zwei, insbesondere drei Verriegelungsvorrichtungen (4; 104) ausgebildet sind.

3. Luftführungsgehäuse nach Anspruch 1 oder 2, **dadurch gekennzeichnet, dass** die Verriegelungsvorrichtung (4; 104) einen hakenförmigen Bereich (8; 108; 208; 208'; 208") und einen vorstehenden Bereich (9; 109; 209; 209'; 209") umfasst, die an unterschiedlichen Bauteilen ausgebildet sind und miteinander zusammenwirken.

4. Luftführungsgehäuse nach Anspruch 3, **dadurch gekennzeichnet, dass** der hakenförmige Bereich (8; 108) gegenüber dem vorstehenden Bereich (9; 109) im zusammengebauten Zustand vorgespannt ist.

5. Luftführungsgehäuse nach Anspruch 3 oder 4, **dadurch gekennzeichnet, dass** der hakenförmige Bereich (8; 108) gegenüber dem vorstehenden Bereich (9; 109) geneigt angeordnet ist.

6. Luftführungsgehäuse nach einem der Ansprüche 3 bis 5, **dadurch gekennzeichnet, dass** der hakenförmige Bereich (8; 108; 208; 208"), in Zusammenbaurichtung vorne, verschlossen ist.

7. Luftführungsgehäuse nach einem der Ansprüche 3 bis 6, **dadurch gekennzeichnet, dass** der hakenförmige Bereich (8) mindestens eine Verstärkungsrippe aufweist.

8. Luftführungsgehäuse nach einem der vorhergehenden Ansprüche, **dadurch gekennzeichnet, dass** der Dichtungsbereich (5; 105) im Bereich, in welchen die Verriegelungsvorrichtungen (4; 104) vorgesehen sind, in gerader Linie und parallel zur Zusammenbaurichtung verläuft.

## Claims

1. Air duct housing for ventilation, heating or air conditioning systems in a motor vehicle, with openings for fitting connecting pieces such as air supply connections, covers or the like, wherein an opening (6) is surrounded by a surface against which a surface of a fitted connecting piece bears while forming a seal, and wherein a sealing region (5; 105) is formed as a kind of tongue-andgroove joint between the air duct housing (1; 101) and the connecting piece and wherein at least one locking device (4; 104) separate from the sealing region (5; 105) is provided, one part of the locking device (4; 104) being formed on the air duct housing (1; 101) and one part of the locking device (4; 104) being formed on the connecting piece, wherein the sealing region (105) is designed continuous and the locking device (104) is located outside the region enclosed by the sealing region (105), **characterised in that** the parts of the locking device (4; 104) can be locked to one another by a linear relative movement between the air duct housing (1; 101) and the connecting piece.

2. Air duct housing according to claim 1, **characterised in that** at least two, in particular three, locking devices (4; 104) are provided on each side of the air duct housing (1; 101) and the connecting piece which extends in the assembly direction.

3. Air duct housing according to claim 1 or 2, **characterised in that** the locking device (4; 104) comprises a hook-shaped region (8; 108; 208; 208'; 208") and a projecting region (9; 109; 209; 209'; 209") provided on different components and acting together with one another.

4. Air duct housing according to claim 3, **characterised in that** the hook-shaped region (8; 108) is preloaded against the projecting region (9; 109) in the assembled state.

5. Air duct housing according to claim 3 or 4, **characterised in that** the hook-shaped region (8; 108) is inclined relative to the projecting region (9; 109).

6. Air duct housing according to any of claims 3 to 5, **characterised in that** the hook-shaped region (8; 108; 208; 208") is closed in the front as viewed in the assembly direction.

7. Air duct housing according to any of claims 3 to 6, **characterised in that** the hook-shaped region (8) includes as least one reinforcing rib.

8. Air duct housing according to any of the preceding claims, **characterised in that** the sealing region (5; 105) extends in a straight line and parallel to the assembly direction in the region where the locking devices (4; 104) are provided.

## Revendications

1. Carter de guidage d'air pour des systèmes de ventilation, de chauffage ou de climatisation dans un véhicule automobile, comprenant des ouvertures pour le montage de pièces de raccordement telles que des tubulures d'alimentation d'air, des couvercles d'obturation ou des pièces de type analogue, où une ouverture (7) est entourée par une surface sur laquelle s'applique, de façon étanche, la surface d'une pièce de raccordement montée, et une zone d'étanchéité (5 ; 105) est formée, comme une sorte d'assemblage mâle / femelle, entre le carter de guidage d'air (1 ; 101) et la pièce de raccordement, et il est prévu au moins un dispositif de verrouillage (4 ; 104) séparé de la zone d'étanchéité (5 ; 105), où une partie du dispositif de verrouillage (4 ; 104) est formée sur le carter de guidage d'air (1 ; 101), une partie du dispositif de verrouillage (4 ; 104) étant formée sur la pièce de raccordement, où la zone d'étanchéité (105) est configurée de façon circulaire, et les dispositifs de verrouillage (104) sont disposés à l'extérieur de la zone englobée par la zone d'étanchéité (105),
**caractérisé en ce que** les pièces du dispositif de verrouillage (4 ; 104) sont verrouillables entre elles, par un mouvement relatif linéaire entre le carter de guidage d'air (1 ; 101) et la pièce de raccordement.

2. Carter de guidage d'air selon la revendication 1,
**caractérisé en ce qu'**au moins deux, en particulier trois dispositifs de verrouillage (4 ; 104) sont configurés sur chaque côté du carter de guidage d'air (1 ; 101) et de la pièce de raccordement, s'étendant dans la direction d'assemblage.

3. Carter de guidage d'air selon la revendication 1 ou 2,
**caractérisé en ce que** le dispositif de verrouillage (4 ; 104) comprend une zone en forme de crochet (8 ; 108 ; 208 ; 208' ; 208") et une zone saillante (9 ; 109 ; 209 ; 209' ; 209") qui sont configurées sur différents composants et agissent l'une avec l'autre de façon conjointe.

4. Carter de guidage d'air selon la revendication 3,
**caractérisé en ce que** la zone en forme de crochet (8 ; 108) est, à l'état assemblé, précontrainte par rapport à la zone saillante (9 ; 109).

5. Carter de guidage d'air selon la revendication 3 ou 4,
**caractérisé en ce que** la zone en forme de crochet (8 ; 108) est disposée en étant inclinée par rapport à la zone saillante (9 ; 109).

6. Carter de guidage d'air selon l'une quelconque des revendications 3 à 5, **caractérisé en ce que** la zone en forme de crochet (8 ; 108 ; 208 ; 208") est obturée dans la direction d'assemblage, à l'avant.

7. Carter de guidage d'air selon l'une quelconque des revendications 3 à 6, **caractérisé en ce que** la zone en forme de crochet (8) présente au moins une nervure de renfort.

8. Carter de guidage d'air selon l'une quelconque des revendications précédentes, **caractérisé en ce que** la zone d'étanchéité (5 ; 105), dans la zone dans laquelle les dispositifs de verrouillage (4 ; 104) sont prévus, s'étend en ligne droite et parallèlement à la direction d'assemblage.
